Europäisches Patentamt

European Patent Office

Office européen des brevets

(11) Publication number : **0 484 146 A1**

# EUROPEAN PATENT APPLICATION

(21) Application number : **91310047.5**

(22) Date of filing : **30.10.91**

(51) Int. Cl.[5] : **F41H 7/10, B60P 1/38**

(30) Priority : **31.10.90 GB 9023715**

(43) Date of publication of application :
**06.05.92 Bulletin 92/19**

(84) Designated Contracting States :
**DE ES FR IT**

(71) Applicant : **ROYAL ORDNANCE PLC**
**11 The Strand**
**London WC2N 5JT (GB)**

(72) Inventor : **Howson, Adrian James David**
**8 Mitre Street**
**Buckingham MK18 1PW (GB)**
Inventor : **Grainger, Frederick George Edward**
**24 Studley Crescent, New Barn**
**Longfield, Kent DA3 7JT (GB)**

(74) Representative : **Foster, Allan Scott et al**
**Royal Ordnance plc 11 The Strand Patents &**
**Licensing Department 2nd Floor**
**London WC2N 5JT (GB)**

(54) **Dispensing of objects on the ground.**

(57)    A mine laying vehicle for dispensing mines from a pallet on a vehicle.

The vehicle has a support rim structure for supporting pallets, each pallet housing vertically stacked mines, which can be dropped from the pallet in a predetermined manner into a compartment beneath the pallet, and from there are conveyed to an exit from which they can be dropped onto the ground.

Fig. 2.

EP 0 484 146 A1

The present invention relates to the dispensing of objects such as mines on the ground.

According to the present invention in a first aspect there is provided an apparatus for dispensing objects on the ground which comprises a structure for mounting on a land vehicle which has a support rim structure capable of supporting one or more pallets each capable of holding a plurality of vertical stacks of objects and having means for allowing the objects to drop in a pre-determined manner beneath the pallet, a compartment beneath the support rim structure and conveying means in the compartment for feeding objects dispensed from the pallet or pallets to an exit from which they can be dropped on to the ground.

The conveying means may comprise one or more chutes which collect the objects dispensed in turn from each stack in the pallet or pallets and allow them to move by gravity to the exit behind the vehicle. Alternatively, or in addition, the conveying means may include a mechanised conveyor belt which collects dispensed objects and transports them to a location where they can be allowed to fall from the exit by gravity.

The exit may comprise one or more funnels each inclined with its narrower end below its wider end. One or more chutes or conveyor belts may be arranged to feed objects into the funnel.

Each funnel may optionally be provided with an impeller which propels objects toward the ground and away from the exit.

Means may additionally be provided to bury objects falling behind the vehicle under the surface of the ground.

The vehicle providing the apparatus according to the present invention may be a vehicle having its own engine. Alternatively, it may be a trailer capable of being towed by such a self-powered vehicle. It may be a wheeled or tracked vehicle. It may for example be a so-called DROPS pallet trailer as employed widely in service use with the UK Ministry of Defence. In such a case the compartment housing the conveying means is provided above the conventional base of the trailer. A structure comprising a housing forming the compartment and the support rim structure provided above that may be deposited securely on the base to form a secondary base on which the object containing pallets may be positioned and supported. The pallets may be of similar size and shape to the "unit load containers" employed on DROPS trailers.

The support rim structure of the apparatus according to the first aspect may include intermediate ribs or girders acting as support portions as well as pallet support portions or flanges formed around the periphery of the support structure. The structure may include vertical as well as horizontal support portions (relative to the vehicle base when disposed horizontally)) so that lateral movements of the pallets when carried on the support rim structure are restrained.

Vertical portions beneath the support rim structure may also support the support rim structure.

According to the present invention in a second aspect there is provided an apparatus as defined hereinbefore according to the first aspect and one or more pallets supported on the support rim structure of the apparatus, each pallet holding a plurality of vertical stacks of objects and having means for allowing the objects to drop in a pre-determined manner from the stacks on to the conveying means of the said apparatus.

The pallet(s) may be of a kind having a series of release gates each beneath a given stack of objects the gates being opened in sequence, for example by an electromechanical controller which may be operated by a signal from a remote control panel set to select the sequence and time difference between opening of gates. Pallets or dispensers of this kind are known per se for use in the dispensing of objects from the air when the pallets are carried by helicopter.

The objects dispensed by the apparatus according to the present invention may be explosive mines, e.g., anti-tank or anti-vehicle mines or anti-personnel mines. They could also include other devices to be deposited on or in the ground for use in a military scenario, e.g., remote surveillance sensors.

Where the objects are mines they may pass from the pallets through mechanical arming and electronic programming mechanisms before being dispersed on to the ground. Arming is required to release safety restraints and programming is to set the mode and life parameters of programmable mines. Where the conveying means includes a mechanised conveyor belt, the belt can be arranged to transport the mines through an arming and programming area onto the location where they can be allowed to fall from the exit.

The present invention beneficially allows object-carrying dispensers or pallets known for use in the helicopter carriage and dropping of objects to be carried and employed for dispensing objects in a dual land vehicle mode. Conveniently, such objects can be carried in pallets on a conventional in-service vehicle trailer which can be adapted in a relatively simple manner to dispense objects from the pallets. In a continuous object-laying process employing apparatus according to the present invention object dispensing pallets may as they become empty be replaced with full pallets. The support rim structure may itself include, for example, a conveyor arrangement to achieve this.

The pallets may be conveyed, in either a continuous or non-continuous process, to a particular location on the vehicle at which the objects are released into the said compartment below incorporating the said conveying means.

Embodiments of the present invention will now be described by way of example with reference to the accompanying drawings, in which:

Figure 1 is a perspective view of a mine laying apparatus fitted on a vehicle trailer;

Figure 2 is a cross-sectional side elevation of the apparatus shown in Figure 1.

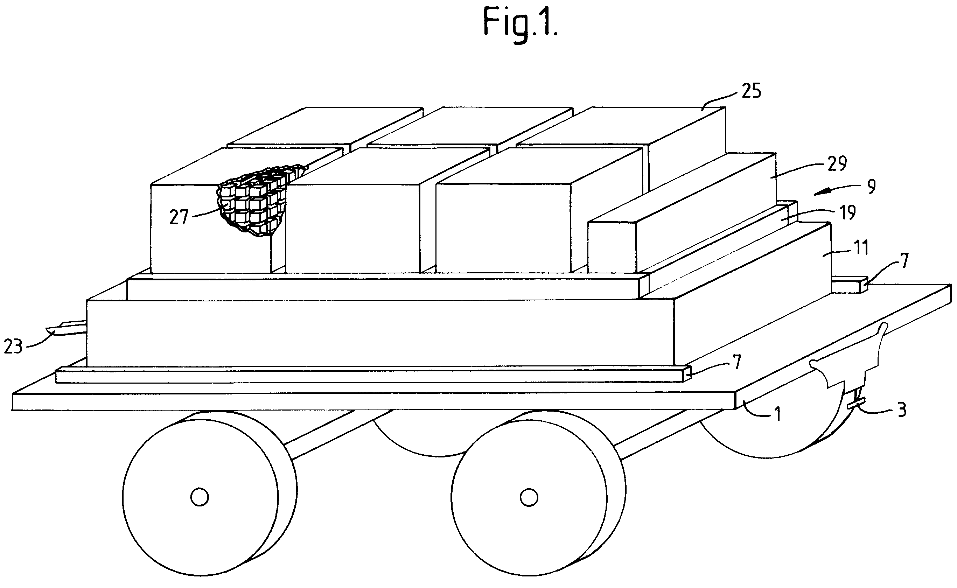

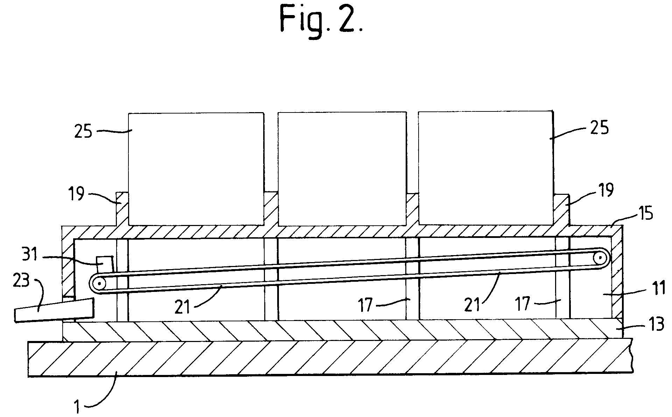

In the equipment shown in Figures 1 and 2 a conventional trailer 1 for a land vehicle having a hitching means 3 has deposited thereon between side stops 7 a construction 9 comprising a compartment 11 formed on a base 13, the compartment 11 carrying an arrangement of horizontal support ribs 15, forming an open roof for the compartment 11. Vertical support girders 17 support the ribs 15 and a grid of vertical flanges 19 extends upwardly from the ribs 15.

In the compartment 11 is housed a conveyer belt 21 inclined downwardly toward one end below which is a funnel-shaped chute 23 forming an exit to the region outside the compartment 11 behind the trailer 1. Arming and programming devices 31 are mounted in the compartment 11 and positioned at a point near to where the mines fall away to the ground.

The support ribs 15 support pallets 25 located between the grid of flanges 19. Each pallet 25 contains a series of rows and columns of vertical stacks each containing a series of mines contained in boxes 27. A control panel 29 (not shown in Figure 2) is carried on the support ribs 15 and is connected by an arrangement of suitable electrical connections to gates (not shown) beneath each vertical stack of boxes in the pallets 25.

In use, the pallets 25, which are the same as used in helicopter dispensed mine systems, are operated by the control panel 29 in the same manner as in helicopter dispensing. The mines contained in the boxes 27 are dropped in sequence from the pallets 25 in turn onto the conveyor belt 21 by which they are carried through the arming and programming devices 31 and onto the chute 23 and thereby dropped onto the ground behind the trailer 1.

An impeller (not shown ) may be provided on the chute 23 to assist projecting the mines toward the ground.

The pallets 25 may for example be modified Barmine or ROMINX pallets or dispensers of the DAT type as produced by Tecnovar of 95 Via Argiro, 70121 Bari, Italy. In use of such dispensers the interval between gate openings to release mines in a given stack may be set (by the user) between 0.1 and 9.9 seconds in increments of 0.1 second.

**Claims**

1. An apparatus for dispensing objects on the ground which comprises a structure for mounting on a land vehicle which has a support rim structure capable of supporting one or more pallets each capable of holding a plurality of vertical stacks of objects and having means for allowing the objects to drop in a pre-determined manner beneath the pallet, a compartment beneath the support rim structure and conveying means in the compartment for feeding objects dispensed from the pallet or pallets to an exit from which they can be dropped onto the ground.

2. An apparatus as claimed in claim 1 and wherein the conveying means comprises one or more chutes which collect the objects dispensed in turn from each stack in the pallet or pallets and allow them to move by gravity to the exit behind the vehicle.

3. An apparatus as claimed in claim 1 or claim 2 and wherein the conveying means includes a mechanised conveyor belt which collects dispensed objects and transports them to a location where they can be allowed to fall from the exit by gravity.

4. An apparatus as claimed in any one of the preceding claims and wherein the exit comprises one or more funnels each inclined with its narrower end below its wider end.

5. An apparatus as claimed in claim 4 and wherein one or more chutes or conveyor belts is arranged to feed objects into the funnel or funnels.

6. An apparatus as claimed in claim 4 or claim 5 and wherein each funnel may optionally be provided with an impeller which propels objects toward the ground and away from the exit.

7. An apparatus as claimed in any one of the preceding claims and wherein the support rim structure of the apparatus includes intermediate ribs or girders acting as support portions.

8. An apparatus as claimed in any one of the preceding claims and including pallet support portions or flanges formed around the periphery of the support structure.

9. An apparatus as claimed in claim 8 and wherein the structure includes vertical support portions to restrain lateral movements of the pallets when carried on the support structure.

10. An apparatus as claimed in any one of the preceding claims and including one or more pallets supported n the support rim structure of the apparatus, each pallet holding a plurality of vertical stacks of objects and having means for allowing the objects to drop in a pre-determined manner from the stacks onto the conveying means of the said apparatus.

11. An apparatus as claimed in claim 10 and wherein the pallet(s) are of a kind having a series of release gates each beneath a given stack of objects the gates being opened in sequence, by an electromechanical controller which may be operated by a signal from a remote control panel set to select the sequence and time difference between opening of gates.

12. An apparatus for dispensing mines on the ground as claimed in any of the preceding claims and having means for mechanically arming the mines and electrically programming the mines after the mines have dropped beneath the pallet and before the mines are dropped on the ground.

13. An apparatus as claimed in claim 12 in which the means for mechanically arming the mines and electrically programming the mines is located in the compartment adjacent to the said exit.

14. An apparatus as claimed in claim 1 and substantially as described hereinbefore with reference to the accompanying drawings.

# Fig.1.

EP 0 484 146 A1

# Fig. 2.

**European Patent Office**

# EUROPEAN SEARCH REPORT

Application Number

EP 91 31 0047

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-788 190 (REBOUL R.)<br>* the whole document * | 1-14 | F41H7/10<br>B60P1/38 |
| Y | DE-A-3 120 423 (SCHMIDT GMBH)<br>* page 21, paragraph 2 - page 22, paragraph 1; figures 1-10 *<br>* page 25, paragraph 2 *<br>* page 27, paragraph 2 *<br>* page 28, paragraph 2 - page 29 * | 1-14 | |
| Y | DE-A-2 165 688 (KRAUSS-MAFFEI AG)<br>* page 1, paragraph 3 - page 2; figures 1-6 *<br>* page 8, paragraph 2 - page 10, paragraph 2 * | 7-9 | |
| A | | 1-6,<br>10-14 | |
| Y | FR-A-2 258 612 (ETAT FRANÇAIS)<br>* page 2, line 11 - line 18 * | 6 | |
| A | US-A-2 951 422 (BOBKOWSKI V.)<br><br>* column 1, line 15 - line 31 *<br>* column 2, line 12 - line 35 *<br>* column 3, line 53 - line 45 * | 1-3,7,8,<br>10,11 | TECHNICAL FIELDS SEARCHED (Int. Cl.5) |
| A | FR-A-1 549 495 (ETAT FRANÇAIS)<br>* the whole document * | 1 | F41H<br>B60P<br>F41A |
| A | FR-A-1 349 069 (ACHAMMER A.) | | |

The present search report has been drawn up for all claims

| Place of search | Date of completion of the search | Examiner |
|---|---|---|
| THE HAGUE | 20 JANUARY 1992 | VAN DER PLAS J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)